# EUROPEAN PATENT SPECIFICATION

(11) **EP 1 451 911 B1**
(45) Date of publication and mention of the grant of the patent: **08.02.2012**
(21) Application number: 02783110.6
(22) Date of filing: 03.12.2002
(51) Int. Cl.: H02G 5/00, H01B 17/18

(54) **SUPPORT INSULATOR**
TRÄGERISOLATOR
ISOLATEUR SUPPORT

(30) Priority: 05.12.2001 FI 20012394
(43) Date of publication of application: 01.09.2004
(73) Proprietor: Suomen CNC-Metal OY, 83501 Outokumpu (FI)
(72) Inventor: JORMANAINEN, Martti, FIN-83100 Liperi (FI)
(74) Representative: Pitkänen, Hannu Alpo Antero
(86) International application number: PCT/FI2002/000970
(87) International publication number: WO 2003/050928

(56) References cited:
- EP-A1- 0 004 266
- DE-A1- 19 511 358

## Description

The present invention relates to a supporting insulator and especially to a supporting insulator to be used in power feeder busbar systems, which insulator includes a frame with notches for adjusting a busbar provided in a distance from each other and which are, at least partly, as the cross-section or as a part of the cross-section by shape.

A supporting insulator with the features of the preamble of the independent claim 1 is disclosed in DE 195 113 58 A1.

Supporting insulators are used, for example, in power distribution centres or in corresponding centres and in power feeder busbar systems going to those in order to fix busbars and in order to insulate busbars from each other and from a frame. In currently recognized solutions a supporting insulator refers to a plate insulator with an opening of the same size and shape as the cross-section of the busbar. A tilelike supporting insulator is used in some solutions. Supporting insulator may have notches or corresponding grooves on one side, in which the busbar is adjusted.

In solutions with a plate insulator for each busbar size a special supporting plate insulator is needed, in which plate there is an opening of the size of cross-section of a busbar and usually of a shape of a busbar. Therefore for securing the availability of all parts supporting insulators that correspond to all busbars needed in use must be provided and stored.

In order to transfer electric current from place to place inside the centre busbars capable of transferring currents with various powers in various places are needed. In busbar supporting insulators with openings the busbar must be pushed through the opening in the supporting insulator while mounting and therefore a lot of working space is needed round and above the centre for mounting. The distance between busbars in various places of use may vary and while using a supporting insulator with fixed openings it is not possible to choose the distance between busbars flexibly. The shape of busbars is different and every shape needs its own kind of supporting insulator.

The object of the invention is to provide a supporting insulator, with using of which disadvantages of current supporting insulators are eliminated. Especially, the object of the invention is to provide a supporting insulator, which may be used for adjusting and insulating several same kind of and/or different kind of busbars. Furthermore the object of the invention is to provide a supporting insulator, in which distance between busbars can be choosen flexiably when using the insulator.

The object of the invention is accomplished by a supporting insulator, the characteristics of which are presented in the claims.

In a supporting insulator in accordance with the invention at least two of the sides of the frame of the supporting insulator are provided with notches. When there are several notches on the sides of the supporting insulator several busbars may be fixed to it and each busbar may be fixed on a suitable place in the notch, such that the distance between busbars may be chosen as desired. Busbars may be fixed by piling them first to one supporting insulator bar and then blocking this package of bars with an opposite supporting insulator bar. There is no need to push a long busbar into an opening. In a supporting insulator only a part of sides or all vertical sides may be provided with notches with shape of the cross-section or a part of it of busbars to be used. To diversify the use at least two or more or even all of the sides of a supporting insulator may be utilized. In earlier recognized solutions this is not done. At least one side of the frame is provided with notches in a various distance from one another. In such a case mounting in variable distances may be carried out easier than earlier.

In an advantageous embodiment of the invention at least a part of the sides of the frame have been provided with notches of a shape differing from one another. In such a case one supporting insulator may be used for mounting, fixing and insulating various and different in shape busbars.

In accordance with a further embodiment of the invention the cross-section of the frame is in shape of a polygon. The cross-section may be in a shape of a square, a rectangle, a polygon or of any other shape. The supporting insulator bar may be of any length and the sides may be provided with any amount of notches of any shape. On sides there may be various shoulders or the sides are shoulders with notches.

While utilizing a supporting insulator in accordance with the invention all busbars of all sizes inside the centre and in feeder fields and tunnels (busbar bridges) may be insulated and fixed with the same supporting insulator bar. There will be savings in costs in stocking, providing and manufacturing of manufacturing tools of insulators. No busbars needed must be oversized while in sides of the supporting insulator notches of various sizes may be chosen to bars of various widths. The material used in supporting insulators is non-conductive electricity with a high enough melting point and mechanical strength.

Next, the invention will be explained in more detail with reference to the accompanying drawings, in which,
Figure 1 illustrates an application of a supporting insulator in accordance with the invention viewed diagonally from side, and
Figure 2 illustrates an application of a construction of a power distribution centre where supporting insulators in accordance with the invention are used.

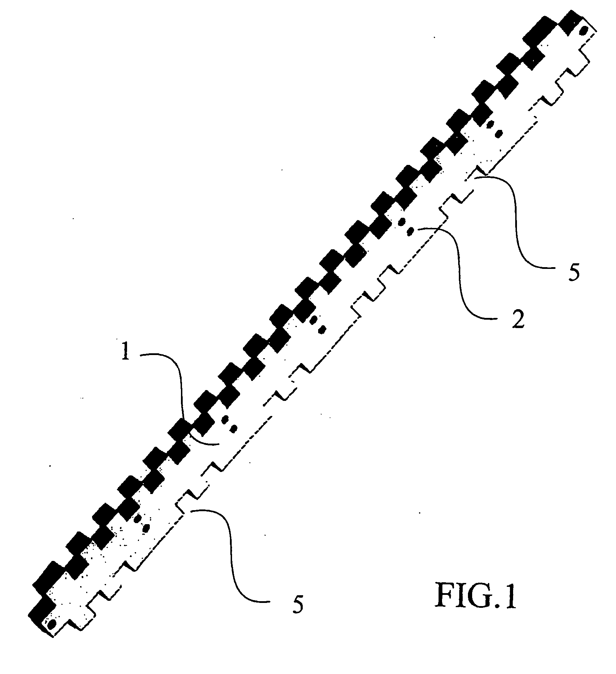

In the supporting insulator presented in figure 1 there is a mainly tilelike and barlike frame 1. There are notches 5 on the opposite sides 2 of the frame and the notches are placed in a distance from one another. The notches 5 are of the shape of a part of the cross-section of busbars. The notches are of equal size on one side and placed in a same distance from each other. On the other side the notches are of equal size, but placed in a different distance with each other. Furthermore, the distances are different on each side.

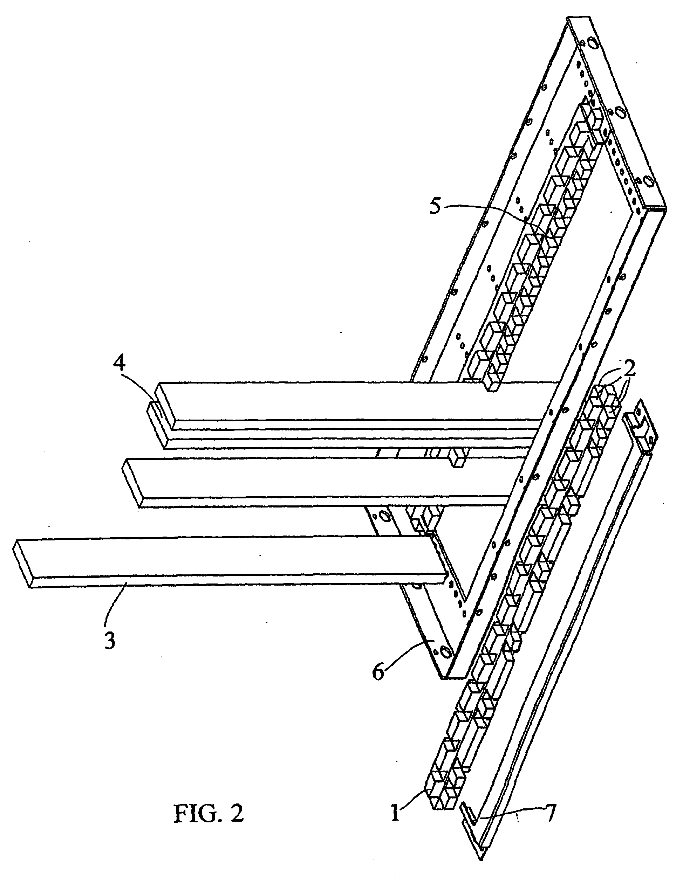

In figure 2 there is the supporting insulator presented separate from the power distribution centre and as a part of it. In the supporting insulator presented in figure 2 there is a barlike frame 1 with four shoulders reaching to different directions and placed mainly perpendicularly to each other. These shoulders form the sides 2 of the supporting insulator. There are notches 5 in every side 2 of the supporting insulator, which notches are placed in a distance from each other. The notches 5 are of shape of a part of a cross-section of the busbars. The notches are of equal size on one side and placed in a same distance from each other. On the other side the notches are of equal size, but placed in a different distance with each other. Furthermore, the distances are different on each side. It is also possible to make the notches with different sizes on various sides.

The busbar system in accordance with the figure 2 is built such, that two supporting insulator bars 1 are mounted sides 2 opposite each other such forming a notch 5 or a pair of notches between them formed by the attachment of busbar 3 and the insulating space 4. A supporting insulator or a pair of supporting insulators may be attached straight to the frame construction 6 of the centre or by means of a strengthening and attaching cover 7 supporting the supporting insulator from around.

The same supporting insulator 1 or a pair of supporting insulators 1+1 may be used also as an intermediate supporting insulator between supporting insulators fixed to the centre frame. A part of the notches 5 between the supporting insulators 1 may be left unused depending on the bar package to be built.

The supporting insulator in accordance with the invention and the construction of it may vary in various solution of the invention. The supporting insulator bar may be as high as the whole bar space or only a part of it or meant for only one busbar. The supporting insulator may be mounted to any angle in respect with the frame construction. The notches 5 of the supporting insulator 1 may be built to any angle in respect with the longitudinal line of the supporting insulator. The cross-section profile of he supporting insulator bar may be either symmetric or asymmetric.

## Claims

1. A supporting insulator and especially a supporting insulator for using in power feeder busbar systems, which insulator includes a mainly barlike frame (1), with notches (5) for mounting of a busbar, which notches are placed in a distance from one another and which are at least partly of shape of the cross-section or a part of the cross-section of the busbar (3), and at least two of the sides of the supporting insulator frames are provided with notches (5), **characterized in that** at least one of the sides of the frame is provided with notches placed in various distances from each other.

2. A supporting insulator in accordance with claim 1, **characterized in that** at least a part of the sides of the frame are provided with notches of various shapes.

3. A supporting insulator in accordance with claim 1 or 2, **characterized in that** the cross-section of the frame is a polygon by shape.

## Patentansprüche

1. Stützisolator und insbesondere ein Stützisolator zur Verwendung in Stromversorgungs-Sammelschienensystemen, wobei der Isolator einen hauptsächlich schienenartigen Rahmen (1) enthält, der Aussparungen (5) zum Montieren einer Sammelschiene aufweist, wobei die Aussparungen in einem Abstand voneinander angeordnet sind und mindestens teilweise eine Form aufweisen, die dem Querschnitt oder einem Teil des Querschnitts der Sammelschiene (3) entspricht, und wobei mindestens zwei der Seiten der Stützisolatorrahmen mit Aussparungen (5) versehen sind, **dadurch gekennzeichnet, dass** mindestens eine der Seiten des Rahmens mit Aussparungen versehen ist, die in unterschiedlichen Entfernungen voneinander angeordnet sind.

2. Stützisolator nach Anspruch 1, **dadurch gekennzeichnet, dass** mindestens ein Teil der Seiten des Rahmens mit Aussparungen von unterschiedlicher Form versehen sind.

3. Stützisolator nach Anspruch 1 oder 2, **dadurch gekennzeichnet, dass** der Querschnitt des Rahmens die Form eines Vielecks hat.

## Revendications

1. Isolateur de support et particulièrement isolateur de support destiné à être utilisé dans des systèmes de barre omnibus de dispositif d'alimentation d'énergie, lequel isolateur comprend un cadre principalement de barres (1), avec des encoches (5) pour monter une barre omnibus, lesquelles encoches sont placées à une distance l'une de l'autre et sont au moins partiellement de la forme de la coupe transversale ou d'une partie de la coupe transversale de la barre omnibus (3), et au moins deux des côtés des cadres d'isolateur de support sont pourvus d'encoches (5), **caractérisé en ce qu'**au moins l'un des côtés du cadre est pourvu d'encoches placées à diverses distances l'une de l'autre.

2. Isolateur de support selon la revendication 1, **caractérisé en ce qu'**au moins une partie des côtés du cadre sont pourvus d'encoches de diverses formes.

3. Isolateur de support selon la revendication 1 ou 2, **caractérisé en ce que** la coupe transversale du cadre est en forme de polygone.
